# EUROPÄISCHE PATENTSCHRIFT

(11) **EP 1 917 177 B1**
(45) Veröffentlichungstag und Bekanntmachung des Hinweises auf die Patenterteilung: **04.02.2009**
(21) Anmeldenummer: 06805982.3
(22) Anmeldetag: 02.10.2006
(51) Int. Cl.: B62D 25/08

(54) **TRAGSTRUKTUR IM FRONTBEREICH EINES KRAFTFAHRZEUGES**
SUPPORTING STRUCTURE IN THE FRONT REGION OF A MOTOR VEHICLE
STRUCTURE PORTEUSE DISPOSEE DANS LA PARTIE AVANT D'UN VEHICULE AUTOMOBILE

(30) Priorität: 28.10.2005 DE 102005051661
(43) Veröffentlichungstag der Anmeldung: 07.05.2008
(73) Patentinhaber: HBPO GmbH, 59552 Lippstadt (DE)
(72) Erfinder: KERSTING, Dirk, 59555 Lippstadt (DE)
(74) Vertreter: Heumann, Christian
(86) Internationale Anmeldenummer: PCT/EP2006/009537
(87) Internationale Veröffentlichungsnummer: WO 2007/048483

(56) Entgegenhaltungen:
- EP-A- 1 619 089
- EP-A1- 0 908 373
- EP-A1- 0 908 374
- EP-A1- 1 055 535
- US-A- 4 287 961

## Beschreibung

Die Erfindung betrifft eine Tragstruktur im Frontbereich eines Kraftfahrzeuges nach dem Oberbegriff des Patentanspruches 1.

Der Frontbereich eines Kraftfahrzeuges ist heute vielfach als so genanntes Frontendmodul ausgebildet, welches eine im Fahrzeug zu befestigende Tragstruktur oder einen so genannten Montageträger aufweist. An der Tragstruktur bzw. dem Montageträger werden u. a. Kühlkomponenten wie verschiedene Wärmeübertragern und/oder ein Lüftergebläse befestigt. Das Frontendmodul wird vollständig vormontiert und als Baueinheit in das Kraftfahrzeug eingesetzt.

Durch die DE 699 12 263 T2 wurde ein Frontendmodul für ein Kraftfahrzeug bekannt, welches eine Tragstruktur aufweist, in welcher u. a. ein Kühlmittelkühler aufgenommen und befestigt ist. Die Befestigung erfolgt mittels eines Gestells, welches einerseits den Kühler aufnimmt und andererseits mit der Tragstruktur fest verbunden ist. Beim Austausch des Kühlers - z. B. zu Reparaturzwecken - muss dieser nach vorne entnommen werden, was zusätzlichen Bauraum in Fahrtrichtung erfordert.

Durch die US 6,685,258 B2 wurde eine Tragstruktur für ein Frontendmodul bekannt, an welcher eine Lüfterzarge befestigt ist. Über die Anordnung von Wärmeübertragern wie z. B. eines Kühlmittelkühlers oder eines Kondensators ist in dieser Druckschrift nichts offenbart.

Es ist auch bekannt, Kühlkomponenten in Form von Wärmeübertragern zu einer Baueinheit, zu einem Kühlmodul oder einer so genannten Kühlkassette zusammenzufassen und direkt gegenüber der Fahrzeugstruktur abzustützen.

Durch die DE 41 42 023 C2 wurde eine Wärmetauschereinheit für Kraftfahrzeuge mit einem Rahmen aus Kunststoff, einer so genannten Kassette bekannt, in welcher diverse Wärmeübertrager, wie ein Kühlmittelkühler, ein Kondensator u. a. aufgenommen und gehalten sind. Die Kassette mit den Wärmeübertragern weist stirnseitig Streben zur Halterung der Wärmeübertrager und seitlich Halterungen mit Lagerzapfen auf, mittels welcher die gesamte Kassette einschließlich Wärmeübertragern im Fahrzeug, d. h. an der Fahrzeugstruktur abgestützt ist.

Durch die DE 39 22 814 C2 wurde eine ähnliche Kühlkassette bekannt, in welche schubladenartig oder "nach Art einer Kassette" ein Kühlerblock eines Kühlers eingesetzt wird. Die gesamte Kassette bzw. der Halte- und Führungsrahmen für den Kühlerblock ist fest an der Fahrzeugstruktur befestigt.

Durch die EP0908374 wurde ein Tragstruktur im Frontbereich eines Kraftfahrzeuges bekannt mit von einem Tragrahmen oben schwenkbar gehalten Rahmen für Wärmeübertragern, als Aufprallschutzsystem für Fußgänger.

Durch die US4287961 wurde ein Tragstruktur im Frontbereich eines Werksfahrzeuges bekannt mit von einem Tragrahmen seitlich schwenkbar gehalten Rahmen für Wärmeübertragern. Diese Konstruktion ist nicht beabsichtigt zum Einschieben der Wärmeübertrager.

Es ist Aufgabe der vorliegenden Erfindung, an einer Tragstruktur der eingangs genannten Art Kühlkomponenten, insbesondere Wärmeübertrager einfach und kostengünstig zu befestigen, wobei auch ein einfacher Ausbau der Wärmeübertrager möglich sein soll.

Diese Aufgabe wird durch die Merkmale des Patentanspruches 1 gelöst. Erfindungsgemäß ist vorgesehen, dass in Fahrtrichtung vor der Tragstruktur ein Halterahmen zur Aufnahme von Kühlkomponenten schwenkbar angeordnet ist. Vorzugsweise befindet sich die Schwenkachse im unteren Bereich des Halterahmens, welcher vorteilhafterweise zwei seitliche Schwenkzapfen aufweist, welche in entsprechenden Lagern an der Tragstruktur aufgenommen sind. Der schwenkbare Halterahmen kann somit von oben nach unten in leicht geneigter Position in die Lager eingesetzt und dann an die Tragstruktur bzw. den Tragrahmen angeklappt werden. Zur Befestigung sind am Halterahmen und am Tragrahmen entsprechende Befestigungsmittel, z. B. in Form einer Clipsverbindung vorgesehen, welche auch leicht wieder gelöst werden kann. Der Halterahmen weist vorteilhafterweise seitliche Führungsmittel auf, welche ein Einschieben der Wärmeübertrager von oben - nach Art einer Schublade oder Kassette - in den Halterahmen erlauben. Ebenso ist ein Herausnehmen der Wärmeübertrager bei abgeklapptem Halterahmen möglich. Vorteilhaft bei dem erfindungsgemäßen schwenkbaren Halterahmen ist die einfache Befestigung der Wärmeübertrager im Rahmen, die quasi formschlüssig erfolgt. Dies ist insbesondere bei Ganzmetall- bzw. Ganzaluminiumwärmeübertragern, z. B. einem Kältemittelkondensator oder einem Kühlmittelkühler vorteilhaft, weil dadurch die Anbringung von zusätzlichen Befestigungsmitteln entfällt. Dies bedeutet eine Kosteneinsparung, da die Befestigungsmittel nicht - wie bei Kunststoffsammelkästen - angespritzt werden können, sondern angelötet werden müssen. Darüber hinaus ergibt sich durch das Bei- und Abklappen eine einfache Montage- und Demontagemöglichkeit, insbesondere bei Reparaturen.

In vorteilhafter Ausgestaltung der Erfindung ist der Halterahmen auf seiner Innenseite, d. h. in Kontakt mit den Wärmeübertragern derart ausgebildet, dass eine Abdichtung erfolgt und die Luft nicht als Bypass- oder so genannte Falschluft die Wärmeübertrager passiert.

In weiterer vorteilhafter Ausgestaltung der Erfindung ist der Halterahmen auch auf der Außenseite derart ausgebildet, dass eine Abdichtung gegenüber der Tragstruktur bzw. dem Tragrahmen erfolgt. Insofern ist eine vollständige Umfeldabdichtung gegeben.

Nach einer weiteren vorteilhaften Ausgestaltung der Erfindung ist im unteren Bereich des Halterahmens ein weiterer Führungsschacht angeordnet, welcher einen zusätzlichen Wärmeübertrager, z. B. einen Ladeluftkühler, der nur einen Teil der gesamten Stirnfläche ausmacht, aufnehmen kann.

Vorteilhafterweise ist der Halterahmen als einstückiges Kunststoffspritzteil herstellbar, d. h. einschließlich der seitlichen Führungselemente, der Lager sowie der Befestigungselemente für die beigeklappte Position. Die Herstellung als Kunststoffspritzteil erlaubt somit eine genaue Anpassung von Führungsbahnen bezüglich ihres Querschnittes an die zu verwendenden Wärmeübertrager, z. B. einen Ganzaluminiumkühlmittelkühler mit kastenförmigen Kühlmittelkästen sowie einen Kondensator mit zylinderförmigen Sammelrohren.

Die schwenkbare Befestigung des Halterahmens erfolgt zwar vorzugsweise an einer Tragstruktur, wie sie für ein Frontendmodul vorgesehen ist, d. h. an einem so genannten Montageträger. Dies schließt jedoch nicht aus, dass eine erfindungsgemäße Befestigung auch direkt an einer Tragstruktur des Kraftfahrzeuges, z. B. dessen Vorderwand erfolgen kann.

Ein Ausführungsbeispiel der Erfindung ist in der Zeichnung dargestellt und wird im Folgenden näher beschrieben. Es zeigen
- Fig. 1: eine Tragstruktur mit erfindungsgemäßem beigeklappten Halterahmen,
- Fig. 2: die Tragstruktur mit abgeklapptem schwenkbaren Halterahmen in einer Ansicht von der Seite,
- Fig. 3: den abgeklappten Halterahmen mit Tragstruktur in 3-D-Darstellung,
- Fig. 4: den abgeklappten Halterahmen mit teilweise ausgezogenem Kühlmittelkühler und
- Fig. 5: den abgeklappten Halterahmen mit ausgezogenem Kühlmittelkühler und ausgezogenem Kondensator.

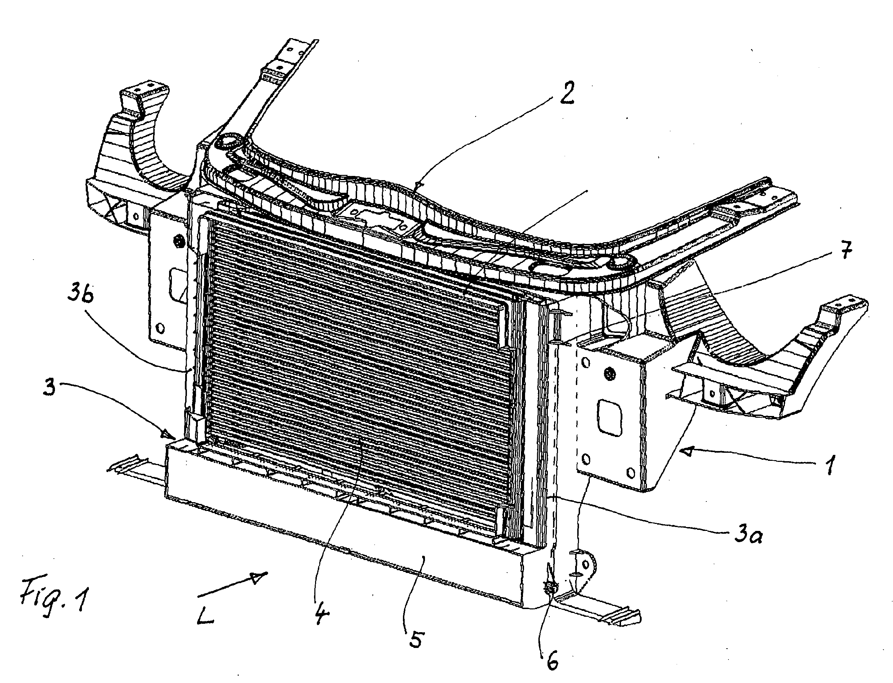

**Fig. 1** zeigt eine als Montageträger 1 ausgebildete Tragstruktur für ein Frontendmodul eines nicht dargestellten Kraftfahrzeuges. Oberhalb des Montageträgers 1 ist ein Querträger 2, ein so genannter Schlossträger angeordnet, welcher auf nicht dargestellte Weise mit der Karosserie des Fahrzeuges verbunden ist. Ebenso ist der Montageträger 1 mit der Karosserie des Fahrzeuges verbunden, z. B. mit nicht dargestellten Längsträgern. Vor dem Montageträger 1 (in Fahrtrichtung gesehen) ist ein Halterahmen 3 angeordnet und mit dem Montageträger 1 schwenkbar verbunden. Der Halterahmen 3 nimmt mehrere Wärmeübertrager, u. a. einen Kondensator 4 auf, dessen Stirnfläche von dem rechteckförmigen Halterahmen 3 vollständig freigegeben und von Umgebungsluft in Richtung des Pfeiles L anströmbar ist. Der Halterahmen 3 weist zwei seitliche Holme, Längsholme 3a, 3b auf, welche an ihren oberen Enden durch eine Querstrebe 3c verbunden sind. Der untere Bereich des Halterahmens 3 weist einen (in Luftströmungsrichtung gesehen) nach vorne und hinten offenen Führungsschacht 5 auf, in welchen ein weiterer nicht dargestellter Wärmeübertrager, z. B. ein Ladeluftkühler einsetzbar ist. An dem Längsholm 3a ist im unteren Bereich ein Schwenkzapfen 6 angeordnet, welcher von einem, hier nicht erkennbaren Lager am Montageträger 1 aufgenommen wird. Im oberen Bereich des Längsholmes 3a ist ein Befestigungselement 7 angeordnet, welches vorzugsweise als Teil einer Clipsverbindung ausgebildet ist. Am gegenüber liegenden Längsholm 3b befinden sich - was bei dieser Darstellung nicht sichtbar ist - entsprechende Befestigungselemente 6, 7. Der Halterahmen 3 befindet sich in der Darstellung in der beigeklappten Position, d. h. er ist - im eingebauten Zustand im Kraftfahrzeug - im Wesentlichen senkrecht ausgerichtet und schließt mit dem Montageträger 1 ab. Darüber hinaus ist der Halterahmen 3 auch - was nicht dargestellt ist -gegenüber dem Montageträger 1 - vorzugsweise stirnseitig - abgedichtet, so dass keine Luft - so genannte Falschluft - die Wärmeübertrager im Bypass umstromen kann.

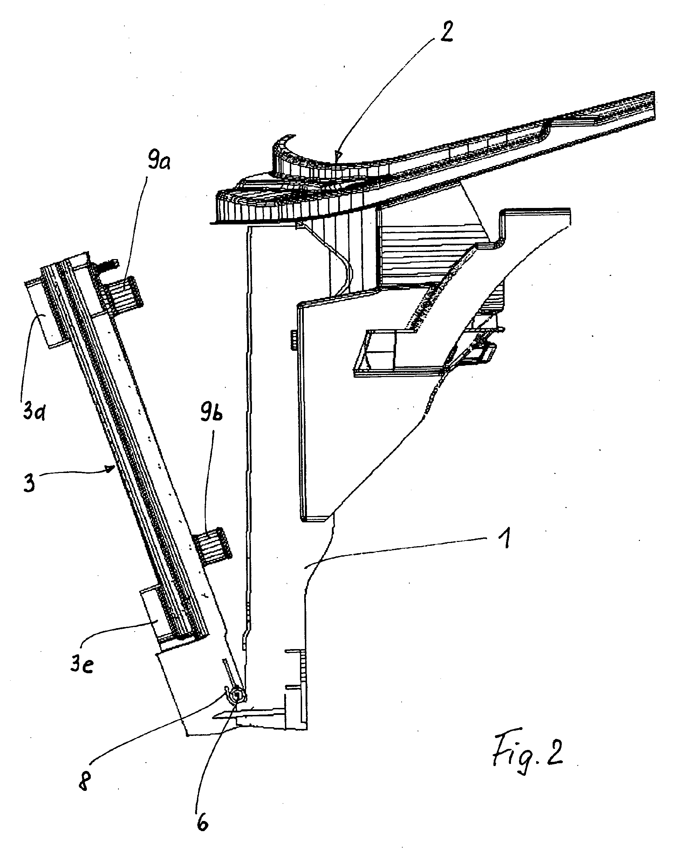

**Fig. 2** zeigt den Montageträger 1 und den Halterahmen 3 in abgeklappter Position in einer Ansicht von der Seite. Der seitlich angeordnete Schwenkzapfen 6 ist in einem U-förmig ausgebildeten, nach oben offenen Schwenklager 8 aufgenommen, welches am Montageträger 1 befestigt ist. Der Halterahmen 3 kann somit in der dargestellten Position von oben nach unten in die beiden Schwenklager 8 eingehängt und anschließend beigeklappt, d. h. an dem Montageträger 1 angeklappt werden. Im oberen und unteren Bereich weist der Halterahmen 3 Luftleitelemente 3d, 3e auf, welche den Luftstrom in Richtung auf die Wärmeübertrager führen. In Luftströmungsrichtung hinter dem bereits erwähnten Kondensator ist ein hier nicht sichtbarer Kühlmittelkühler 9 angeordnet, von dem lediglich die Kühlmittelstutzen 9a, 9b erkennbar sind.

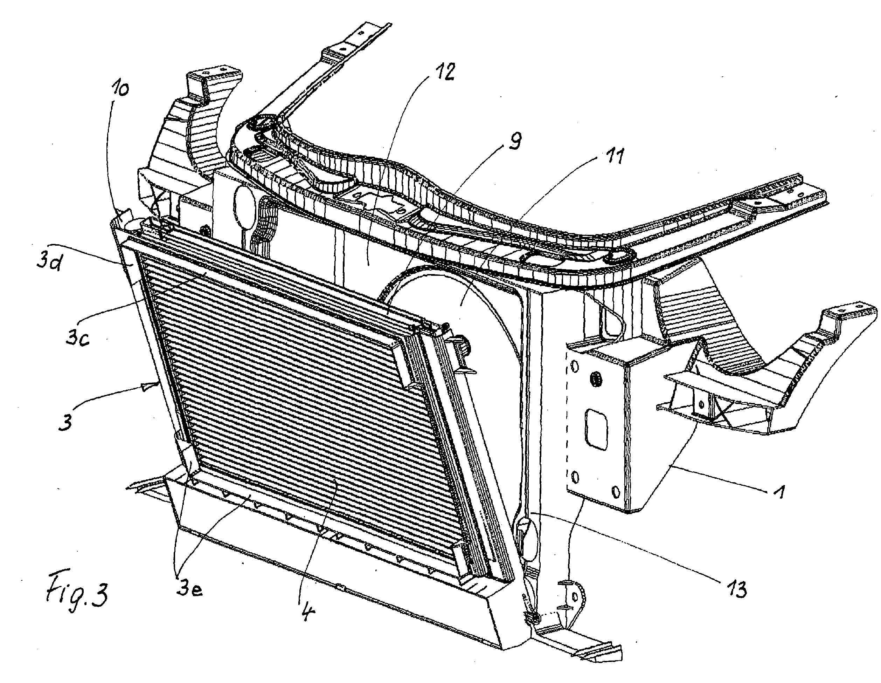

**Fig. 3** zeigt den Halterahmen 3 in gegenüber dem Montageträger 1 abgeklappter Position in perspektivischer Darstellung, wobei eine obere Einschuböffnung 10 für die beiden Wärmeübertrager 4, 9 sichtbar ist. Der in Luftströmungsrichtung hinter dem Kondensator 4 angeordnete Kühlmittelkühler 9 ist als Ganzaluminiumwärmeübertrager, d. h. als vollständig gelötetes Bauteil ausgebildet. In dieser Perspektive sind auch die Luftleitelemente 3c, 3d, 3e gut erkennbar. Im Montageträger 1 ist eine Öffnung 11 angeordnet, in welcher ein nicht dargestellter Lüfter umläuft. Im Übrigen wird der Montageträger 1 rückseitig durch eine Rückwand 12, eine so genannte Lüfterzarge abgeschlossen. Der Montageträger 1 weist in seinem mittleren Bereich einen Tragrahmen 13 mit einer fensterartigen Öffnung für den Durchtritt der Luft auf, wobei der Tragrahmen 13 in Form und Größe etwa dem Halterahmen 3 entspricht. Der Tragrahmen 13 ist Teil des Montageträgers 1.

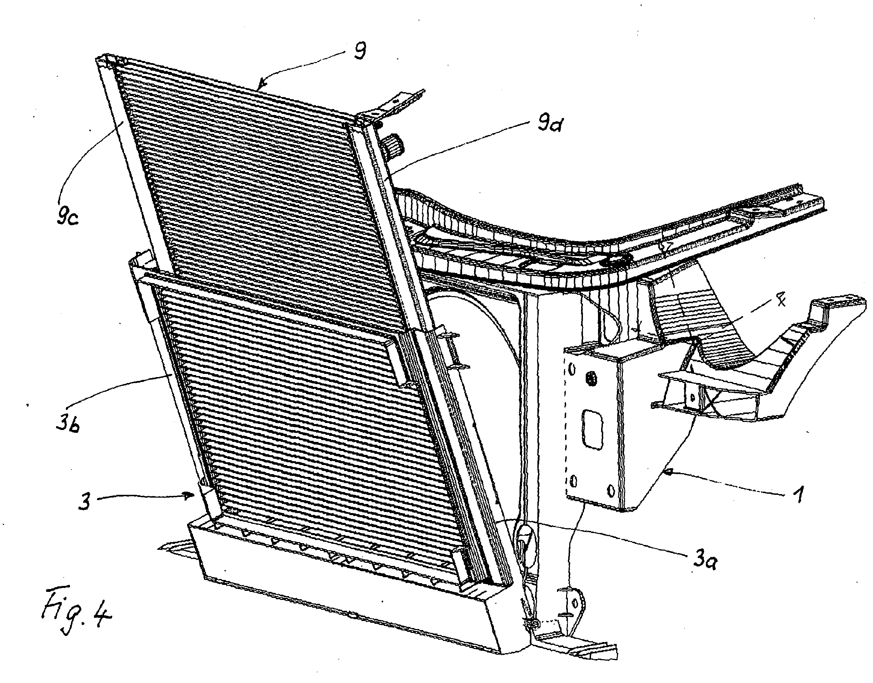

**Fig. 4** zeigt den Halterahmen 3 wiederum in abgeklappter Position, wobei der Kühlmittelkühler 9 teilweise aus dem Halterahmen 3 nach oben herausgezogen ist. Der Kühlmittelkühler 9 ist - wie erwähnt - als Ganzaluminiumwärmeübertrager ausgebildet und weist zwei kastenförmige Kühlmittelkästen 9c, 9d auf, welche als Führungsleisten dienen. Die Längsholme 3a, 3b weisen jeweils ein den Kühlmittelkästen 9c, 9d im Querschnitt angepasstes Führungsprofil auf, so dass der Kühlmittelkühler 9 bei Einschieben und beim Herausziehen geradlinig wie eine Schublade geführt ist.

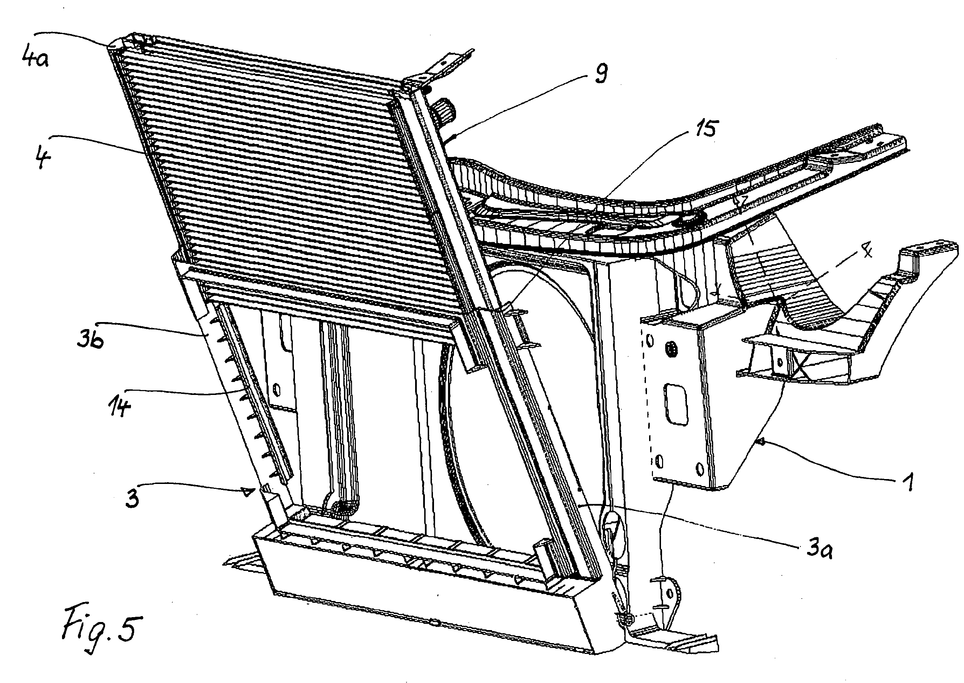

**Fig. 5** zeigt den Halterahmen 3 wiederum in abgeklappter Position, wobei sowohl der Kondensator 4 als auch der Kühlmittelkühler 9 weitestgehend aus dem Halterahmen 3 bzw. den Längsholmen 3a, 3b ausgezogen sind. Am Längsholm 3b ist innen eine Führungsschiene 14 für den Kondensator 4 bzw. dessen Sammelrohr 4a erkennbar. Der Kühlmittelkühler 9 wird über ein Führungsprofil 15 geführt. Die Führungsprofile bzw. Führungsbahnen in den Längsholmen 3a, 3b sind zusätzlich als Dichtmittel ausgebildet, so dass die Wärmeübertrager 4, 9 gleichzeitig gegenüber dem Halterahmen 3 abgedichtet werden.

Aus der vorstehenden Beschreibung wird deutlich, dass die Wärmeübertrager, d. h. der Kondensator 4 und der Kühlmittelkühler 9 auf einfache Weise montiert und auch demontiert werden können. Beides erfolgt bei abgeklapptem Halterahmen 3, so dass die Einschuböffnung 10 frei liegt. Nach dem Einschieben der Wärmeübertrager wird der Halterahmen 3 beigeklappt und mittels der Befestigungselemente 7 am Montageträger 1 befestigt, vorzugsweise verclipst. In umgekehrter Reihenfolge, d. h. Lösen der Befestigungsmittel, Abklappen des Halterahmens 3 und Herausziehen der Wärmeübertrager 4, 9 erfolgt die Demontage.

### Bezugszahlen:

- 1: Montageträger (Tragstruktur mit Tragrahmen)
- 2: Querträger (Schlossträger)
- 3: Halterahmen
- 3a: Längsholm
- 3b: Längsholm
- 3c: Querstrebe
- 3d: Luftleitelement
- 3e: Luftleitelement
- 4: Kondensator
- 4a: Sammelrohr
- 5: Führungsschacht
- 6: Schwenkzapfen
- 7: Befestigungsmittel (Clips)
- 8: Schwenklager
- 9: Kühlmittelkühler
- 9a: Kühlmittelstutzen
- 9b: Kühlmittelstutzen
- 9c: Kühlmittelkasten
- 9d: Kühlmittelkasten
- 10: Einschuböffnung
- 11: Lüfteröffnung
- 12: Rückwand (Lüfterzarge)
- 13: Tragrahmen
- 14: Führungsschiene
- 15: Führungsprofil

## Patentansprüche

1. Tragstruktur (1) im Frontbereich eines Kraftfahrzeuges mit einem Tragrahmen (13), welcher rückseitig durch eine eine Lüfteröffnung (11) aufweisende Rückwand (12) abdeckbar ist, **dadurch gekennzeichnet, dass** in Fahrtrichtung vor dem Tragrahmen (13) ein Halterahmen (3) zur Aufnahme von Kühlkomponenten, insbesondere Wärmeübertragern (4, 9) um eine unten angeordnete, etwa horizontal verlaufende Achse schwenkbar angeordnet ist und dass der Halterahmen (3) auf seiner Oberseite eine Einschuböffnung (10) aufweist, durch welche mindestens ein Wärmeübertrager (4, 9) in Richtung auf die Schwenkachse in den Halterahmen (3) einschiebbar und in entgegengesetzter Richtung wieder entnehmbar ist.

2. Tragstruktur nach Anspruch 1, **dadurch gekennzeichnet, dass** am Halterahmen (3) Teile von Schwenklagern angeordnet sind.

3. Tragstruktur nach Anspruch 2, **dadurch gekennzeichnet, dass** die Teile als seitlich vom Halterahmen (3) abragende Schwenkzapfen (6) ausgebildet sind.

4. Tragstruktur nach Anspruch 3, **dadurch gekennzeichnet, dass** am Tragrahmen (13) U-Profile (8) zur Aufnahme der Schwenkzapfen (6) angeordnet sind.

5. Tragstruktur nach mindestens einem der Ansprüche 1 bis 4, **dadurch gekennzeichnet, dass** am Halterahmen (3), vorzugsweise im oberen, ausschwenkbaren Bereich seitliche Befestigungsmittel (7) zur lösbaren Befestigung des Halterahmens (3) am Tragrahmen (13) angeordnet sind.

6. Tragstruktur nach mindestens einem der Ansprüche 1 bis 5, **dadurch gekennzeichnet, dass** der Halterahmen (3) seitlich angeordnete Führungselemente (14, 15), insbesondere Führungsschienen zur Aufnahme mindestens eines Wärmeübertragers (4, 9) aufweist.

7. Tragstruktur nach mindestens einem der Ansprüche 1 bis 6, **dadurch gekennzeichnet, dass** im Halterahmen (3) im Bereich der Schwenkachse ein Führungsschacht (5) zur Aufnahme eines weiteren Wärmeübertragers angeordnet ist.

8. Tragstruktur nach Anspruch 7, **dadurch gekennzeichnet, dass** der weitere Wärmeübertrager, insbesondere ein Ladeluftkühler quer zu den übrigen Wärmeübertragern in den Führungsschacht (5) einschiebbar ist.

9. Tragstruktur nach mindestens einem der Ansprüche 1 bis 8, **dadurch gekennzeichnet, dass** die Wärmeübertrager (4, 9) auf ihrem Umfang gegenüber dem Halterahmen (3) abdichtbar sind.

10. Tragstruktur nach mindestens einem der Ansprüche 1 bis 9, **dadurch gekennzeichnet, dass** der Halterahmen (3) stirnseitig gegenüber dem Tragrahmen (13) abdichtbar ist.

11. Tragstruktur nach mindestens einem der Ansprüche 1 bis 10, **dadurch gekennzeichnet, dass** einer der Wärmeübertrager als Kühlmittelkühler (9), insbesondere als Ganzaluminiumwärmeübertrager ausgebildet ist.

12. Tragstruktur nach mindestens einem der Ansprüche 1 bis 11, **dadurch gekennzeichnet, dass** einer der Wärmeübertrager als Kältemittelkondensator (4) für eine Klimaanlage ausgebildet ist.

13. Tragstruktur nach mindestens einem der Ansprüche 1 bis 12, **dadurch gekennzeichnet, dass** der Halterahmen (3) im Wesentlichen in zwei Positionen verschwenkbar ist, nämlich in eine erste abgeklappte Position und eine zweite beigeklappte Position.

## Claims

1. Supporting structure (1) in the front region of a motor vehicle having a supporting frame (13) which can be covered at the rear side by a rear wall (12) which has a fan opening (11), **characterized in that** a holding frame (3) for holding cooling components, in particular heat exchangers (4, 9), is arranged, so as to be pivotable about an approximately horizontally-running axis arranged at the bottom in front of the supporting frame (13) in the direction of travel and **in that** the holding frame (3) has, on its upper side, an insertion opening (10) through which at least one heat exchanger (4, 9) can be inserted into the holding frame (3) in the direction of the pivot axis and can be removed again in the opposite direction.

2. Supporting structure according to Claim 1, **characterized in that** parts of pivot bearings are arranged on the holding frame (3).

3. Supporting structure according to Claim 2, **characterized in that** the parts are formed as pivot journals (6) which project laterally from the holding frame (3).

4. Supporting structure according to Claim 3, **characterized in that** U-shaped profiles (8) for holding the pivot journals (6) are arranged on the supporting frame (13).

5. Supporting structure according to at least one of Claims 1 to 4, **characterized in that** lateral fastening means (7) for detachably fastening the holding frame (3) to the supporting frame (13) are arranged on the holding frame (3), preferably, in the upper region which can be pivoted out.

6. Supporting structure according to at least one of Claims 1 to 5, **characterized in that** the holding frame (3) has laterally arranged guide elements (14, 15), in particular guide rails for holding at least one heat exchanger (4, 9).

7. Supporting structure according to at least one of Claims 1 to 6, **characterized in that** a guide shaft (5) for holding a further heat exchanger is arranged in the holding frame (3) in the region of the pivot axis.

8. Supporting structure according to Claim 7, **characterized in that** the further heat exchanger, in particular a charge-air cooler, can be inserted into the guide shaft (5) transversely with respect to the other heat exchangers.

9. Supporting structure according to at least one of Claims 1 to 8, **characterized in that** the heat exchangers (4, 9) can be sealed off at their periphery with respect to the holding frame (3).

10. Supporting structure according to at least one of Claims 1 to 9, **characterized in that** the holding frame (3) can be sealed off at the end side with respect to the supporting frame (13).

11. Supporting structure according to at least one of Claims 1 to 10, **characterized in that** one of the heat exchangers is embodied as a coolant cooler (9), in particular as a fully-aluminum heat exchanger.

12. Supporting structure according to at least one of Claims 1 to 11, **characterized in that** one of the heat exchangers is embodied as a refrigerant condenser (4) for an air-conditioning system.

13. Supporting structure according to at least one of Claims 1 to 12, **characterized in that** the holding frame (3) can substantially be pivoted into two positions, specifically into a first, pivoted-away position and a second, pivoted-to position.

## Revendications

1. Structure porteuse (1) dans la partie avant d'un véhicule automobile, comprenant un châssis porteur (13) qui peut être recouvert à l'arrière par une paroi arrière (12) présentant une ouverture de ventilation (11), **caractérisée en ce que** dans la direction de conduite, avant le châssis porteur (13), un châssis de fixation (3) destiné à recevoir des composants de refroidissement, notamment des échangeurs de chaleur (4, 9), est disposé de manière à pouvoir pivoter autour d'un axe situé en bas, s'étendant approximativement horizontalement, et **en ce que** le châssis de fixation (3) présente sur son côté supérieur une ouverture d'insertion (10) à travers laquelle au moins un échangeur de chaleur (4, 9) peut être inséré dans la direction de l'axe de pivotement dans le châssis de fixation (3), et peut à nouveau en être ressorti dans la direction opposée.

2. Structure porteuse selon la revendication 1, **caractérisée en ce que** l'on dispose sur le châssis de fixation (3) des pièces de paliers pivotants.

3. Structure porteuse selon la revendication 2, **caractérisée en ce que** les pièces sont réalisées sous forme de tourillons de pivotement (6) saillant latéralement depuis le châssis de fixation (3).

4. Structure porteuse selon la revendication 3, **caractérisée en ce que** des profilés en U (8) sont disposés sur le châssis porteur (13) pour recevoir les tourillons de pivotement (6).

5. Structure porteuse selon au moins l'une quelconque des revendications 1 à 4, **caractérisée en ce que** sur le châssis de fixation (3), de préférence dans la région supérieure pouvant s'écarter par pivotement, sont disposés des moyens de fixation latéraux (7) pour la fixation amovible du châssis de fixation (3) sur le châssis porteur (13).

6. Structure porteuse selon au moins l'une quelconque des revendications 1 à 5, **caractérisée en ce que** le châssis de fixation (3) présente des éléments de guidage disposés latéralement (14, 15), notamment des rails de guidage pour recevoir au moins un échangeur de chaleur (4, 9).

7. Structure porteuse selon au moins l'une quelconque des revendications 1 à 6, **caractérisée en ce que** dans le châssis de fixation (3), dans la région de l'axe de pivotement, est disposée une gaine de guidage (5) pour recevoir un échangeur de chaleur supplémentaire.

8. Structure porteuse selon la revendication 7, **caractérisée en ce que** l'échangeur de chaleur supplémentaire, notamment un refroidisseur d'air de charge, peut être introduit transversalement aux autres échangeurs de chaleur dans la gaine de guidage (5).

9. Structure porteuse selon au moins l'une quelconque des revendications 1 à 8, **caractérisée en ce que** les échangeurs de chaleur (4, 9) peuvent être étanchéifiés sur leur circonférence par rapport au châssis de fixation (3).

10. Structure porteuse selon au moins l'une quelconque des revendications 1 à 9, **caractérisée en ce que** le châssis de fixation (3) peut être étanchéifié du côté frontal par rapport au châssis porteur (13).

11. Structure porteuse selon au moins l'une quelconque des revendications 1 à 10, **caractérisée en ce que** l'un des échangeurs de chaleur est réalisé sous forme de refroidisseur de réfrigérant (9), en particulier sous forme d'échangeur de chaleur complètement en aluminium.

12. Structure porteuse selon au moins l'une quelconque des revendications 1 à 11, **caractérisée en ce que** l'un des échangeurs de chaleur est réalisé sous forme de condenseur de fluide frigorigène (4) pour une installation de climatisation.

13. Structure porteuse selon au moins l'une quelconque des revendications 1 à 12, **caractérisée en ce que** le châssis de fixation (3) peut pivoter essentiellement dans deux positions, à savoir dans une première position écartée par pivotement et dans une deuxième position ramenée par pivotement.
